# EUROPEAN PATENT APPLICATION

(11) **EP 3 763 833 A1**
(43) Date of publication of application: **13.01.2021**
(21) Application number: 19763292.0
(22) Date of filing: 05.03.2019
(51) Int. Cl.: C21D 1/76, C21D 1/18, C21D 1/63, C21D 9/40

(54) **WORKPIECE HEAT TREATMENT METHOD AND HEAT TREATMENT DEVICE**

(30) Priority: 08.03.2018 JP 2018041843
(71) Applicant: NTN Corporation, Osaka-shi, Osaka 550-0003 (JP)
(72) Inventor: MANO Yoshiya, Iwata-shi Shizuoka 438-8510 (JP); SUZUKI Shintaro, Iwata-shi Shizuoka 438-8510 (JP)
(74) Representative: Eder Schieschke & Partner mbB
(86) International application number: PCT/JP2019/008605
(87) International publication number: WO 2019/172242

(57) **Abstract**

An inlet side opening 4a for a workpiece W is provided in a first space A in which a heating step S2 for the workpiece W is executed. An outlet side opening 4b for the workpiece W is provided in a second space B that is connected to the first space A and is in contact with a liquid surface of a cooling liquid 36. The heating step S2 and a cooling step S3 are executed while the first space A and the second space B are both sealed by closing the inlet side opening 4a and the outlet side opening 4b with the liquid surface of the cooling liquid 36 to set this sealed space D to a non-oxidizing atmosphere. Then, during the heating step S2 and the cooling step S3, the oxygen concentration in the sealed space D is measured, and on the basis of a measured value of the oxygen concentration, the supply of the non-oxidizing gas Ga into the sealed space D is controlled, and the exhaust of the sealed space D is controlled.

## Description

### TECHNICAL FIELD

The present invention relates to a workpiece heat treatment method and a workpiece heat treatment device.

### BACKGROUND ART

For example, in a manufacturing process of an annular member including a steel material such as SUJ2, for example, a bearing ring of a rolling bearing, a heat treatment (quenching and hardening treatment) for imparting a required mechanical strength and the like to the annular member is performed. This heat treatment includes a heating step of performing a heating treatment in which a base material (annular workpiece) of the annular member is heated to a target temperature, and a cooling step of performing a cooling treatment in which the heated workpiece is cooled and quenched. The heating step can be executed using an atmospheric heating furnace such as a mesh belt type continuous furnace or an induction heating device. In particular, induction heating can directly heat only the workpiece, and thus high energy efficiency can be achieved. Furthermore, there is an advantage that a compact heat treatment device can be provided.

By the way, when the above-mentioned heating treatment or cooling treatment for the workpiece is performed in an atmosphere where oxygen is present, an oxidized scale is generated on a surface of the workpiece with a high probability. The oxidized scale generated on the workpiece surface not only degrades appearance quality by depriving the workpiece of brilliance, but also can cause contamination. The oxidized scale is therefore preferably removed completely by an appropriate means such as polishing, grinding, or shot blasting. However, it is not easy to completely remove the oxidized scale. In particular, when the oxidized scale is generated on the workpiece surface having a complicated shape with minute holes or irregularities, it takes significantly excessive processing to completely remove the oxidized scale. Thus, when the generation of the oxidized scale due to the heat treatment is a problem, for example, as disclosed in Patent Literatures 1 and 2, a series of heat treatment steps including the heating treatment and the cooling treatment are preferably performed in a non-oxidizing atmosphere.

However, in the heat treatment devices disclosed in Patent Literatures 1 and 2, a heating part that inductively heats a workpiece to a target temperature and a cooling part that cools the heated workpiece are provided vertically in a container that can have a non-oxidizing atmosphere therein. One workpiece held by an appropriate means is inductively heated to a target temperature in the heating part, and then the heated workpiece is lowered to a position where the cooling part is disposed. The workpiece is cooled and quenched by a cooling liquid sprayed toward the workpiece. In the heat treatment devices having such a configuration, no treatment can be performed on a following workpiece until the heat treatment (heating and cooling after heating) on the one workpiece is completed. These heat treatment devices, which have a low treatment efficiency, are therefore not preferable as a heat treatment device used in the manufacturing process of mass production components such as bearing rings of rolling bearings.

In order to solve the above problem, the present applicant has proposed a new heat treatment device and a new heat treatment method in the specification of Japanese Patent Application No. 2017-174547. In the heat treatment device and the heat treatment method, heating and cooling are performed in a state where a first space having an inlet side opening for a workpiece that can be opened and closed and executing a heating step, and a second space connected to the first space and closing an outlet side opening for the workpiece with a liquid surface of the cooling liquid that immerses the workpiece are set to a sealed space, and the sealed space has a non-oxidizing atmosphere.

### CITATIONS LIST

### PATENT LITERATURE

Patent Literature 1: JP 2001-59116 A
Patent Literature 2: JP 2002-105532 A

### SUMMARY OF INVENTION

### TECHNICAL PROBLEMS

By the way, the heat treatment device and the heat treatment method proposed in Japanese Patent Application No. 2017-174547 have a structure in which the outlet side opening of the sealed space is closed by the liquid surface of the cooling liquid. Thus, when the heat treatment of the workpiece is started in the sealed space made into the non-oxidizing atmosphere, the oxygen dissolved in the cooling liquid is released into the sealed space through the liquid surface of the cooling liquid over time. This increases the oxygen concentration of the sealed space and increases the risk of forming an oxide film on the workpiece.

In order to avoid such a situation, for example, the non-oxidizing gas needs to be continuously supplied to the sealed space still after the heat treatment of the workpiece is started in the sealed space made into the non-oxidizing atmosphere. However, when the non-oxidizing gas is continuously supplied only to prevent an increase in the oxygen concentration as described above, the supply amount of the non-oxidizing gas increases and the running cost rises. In order to avoid this adverse effect, for example, it is conceivable to replace the atmosphere in the sealed space with a non-oxidizing atmosphere each time the workpiece is loaded and unloaded. However, this method requires a lot of time to replace with the non-oxidizing atmosphere and leads to a decrease in productivity.

In view of the above circumstances, in the present specification, it is a technical problem to be solved that the oxygen concentration of the sealed space for performing the heating treatment and the cooling treatment of the workpiece is stabilized without incurring the cost increase or the decrease in the productivity, and that the heat treatment of the workpiece is efficiently performed.

### SOLUTIONS TO PROBLEMS

The above problem can be solved by a workpiece heat treatment method of the present invention. That is, this heat treatment method is a workpiece heat treatment method that includes a heating step of heating a workpiece, and a cooling step of cooling the workpiece that has been heated in the heating step by immersing the workpiece in a cooling liquid, and performing a predetermined heat treatment on the workpiece, in which an inlet side opening for the workpiece is provided in a first space in which the heating step is executed, and an outlet side opening for the workpiece is provided in a second space that is connected to the first space and is in contact with a liquid surface of the cooling liquid, the heating step and the cooling step are executed while the first space and the second space are both sealed by closing the inlet side opening and the outlet side opening with the liquid surface of the cooling liquid to set this sealed space to a non-oxidizing atmosphere, and an oxygen concentration of the sealed space is measured, and based on a measured value of the oxygen concentration, a supply of a non-oxidizing gas to the sealed space is controlled and exhaust of the sealed space is controlled in the heating step and the cooling step. Note that the term "non-oxidizing atmosphere" used herein refers to a concept including not only an atmosphere in which oxygen is not present at all, but also an atmosphere in which oxygen is slightly present such that no oxidized scale is generated on a surface of the workpiece (for example, an oxygen concentration of lower than 100 ppm). Similarly, the term "non-oxidizing gas" used herein refers to a concept including not only a gas containing no oxygen but also a gas containing a small amount of oxygen such that oxidized scale is not generated on the surface of the workpiece (for example, an oxygen concentration of lower than 100 ppm). The same applies to a heat treatment device of the present invention to be described later.

As described above, in the heat treatment method of the present invention, during the heat treatment of the workpiece, the oxygen concentration of the sealed space is measured, and on the basis of a measured value of the oxygen concentration, the supply of the non-oxidizing gas into the sealed space is controlled, and the exhaust of the sealed space is controlled. Thus, the supply of the non-oxidizing gas and the exhaust of the sealed space can be appropriately selected and executed in accordance with the oxygen concentration in the sealed space. Therefore, for example, by exhausting the sealed space while minimizing a use amount of the non-oxidizing gas, the oxygen concentration in the sealed space can be kept within a predetermined range. Further, the supply of the non-oxidizing gas and the exhaust of the sealed space can be performed together, and thus the oxygen concentration in the sealed space quickly returns to fall within the allowable range (a concentration that becomes a non-oxidizing atmosphere). As described above, according to the present invention, the oxygen concentration in the sealed space can be stabilized during the heat treatment of the workpiece without increasing the cost or lowering the productivity.

According to the heat treatment method of the present invention, of course, the workpiece that has been subjected to a heating treatment in the sealed space is cooled in the cooling liquid adjacent to the sealed space, and is subjected to the predetermined heat treatment. Thus, when one workpiece is cooled after completing the heating step (when immersed in the cooling liquid), the following workpiece can be subjected to the heating treatment in the sealed space, or the workpiece after the heating treatment can be carried to the second space that is in contact with the liquid surface of the cooling liquid for standby. Thus, the heating treatment and the cooling treatment for a plurality of the workpieces can be simultaneously performed in the non-oxidizing atmosphere. The heat treatment can be therefore efficiently performed on the plurality of workpieces without generating an oxidized scale on the surface of the workpieces, thus this makes it possible to cope with a manufacture of mass production components.

Further, in the workpiece heat treatment method of the present invention, an oxygen concentration and an air pressure of the sealed space are measured at regular intervals, and based on measured values of the oxygen concentration and the air pressure, the supply of the non-oxidizing gas into the sealed space may be controlled, and the exhaust of the sealed space may be controlled.

In this way, not only the oxygen concentration but also the air pressure in the sealed space is measured at regular intervals, and the supply of the non-oxidizing gas and the exhaust of the sealed space are controlled on the basis of the measured air pressure value. The oxygen concentration can be thus stabilized while suppressing a fluctuation of the air pressure in the sealed space. In particular, when the outlet side opening of the sealed space is closed by the liquid surface of the cooling liquid, the air pressure of the sealed space may be increased depending on the supply amount of the non-oxidizing gas, and the liquid surface of the cooling liquid closing the outlet side opening may be pushed down. This makes it difficult to manage the liquid surface position and may hinder the cooling control of the workpiece. However, as described above, controlling the supply and exhaust on the basis of the air pressure in the sealed space can avoid such a situation.

Further, as described above, in the case where the air pressure in addition to the oxygen concentration in the sealed space is measured, and the supply and exhaust are controlled on the basis of the measured values of the oxygen concentration and the air pressure, when, for example, the measured oxygen concentration is equal to or higher than an oxygen concentration threshold value and the measured air pressure is equal to or higher than an air pressure upper threshold value, the supply of the non-oxidizing gas may be stopped and the exhaust of the sealed space may be continued.

In this way, when the oxygen concentration is an atmosphere equal to or higher than a preset threshold value, but the air pressure of the sealed space is equal to or higher than the air pressure upper threshold value, unfortunately, the non-oxidizing gas is supplied to further raise the air pressure. In this case, it is thus desirable to continue the exhaust of the sealed space and to stop the supply of the non-oxidizing gas. As a result, it is possible to bring the oxygen concentration close to the allowable range while lowering the air pressure of the sealed space.

Alternatively, when the measured value of the oxygen concentration is equal to or higher than an oxygen concentration threshold value and the measured value of the air pressure is equal to or lower than an air pressure lower threshold value, the supply of the non-oxidizing gas may be continued and the exhaust of the sealed space may be stopped.

In this way, even in an atmosphere in which the oxygen concentration is equal to or higher than the threshold value, when the air pressure of the sealed space is almost the same as or lower than an atmospheric pressure (equal to or lower than the air pressure lower threshold value), the atmosphere of the sealed space may become a negative pressure due to the exhaust of the sealed space, which is an unfavorable outcome (because, for example, the cooling liquid may be drawn into the sealed space). In this case, it is therefore desirable to continue the supply of the non-oxidizing gas and stop the exhaust of the sealed space. As a result, it is possible to bring the oxygen concentration close to a target range (lower than the oxygen concentration threshold value) while preventing the air pressure of the sealed space from decreasing.

Alternatively, when the measured value of the oxygen concentration is equal to or higher than an oxygen concentration threshold value and the measured value of the air pressure is higher than the air pressure lower threshold value and lower than the air pressure upper threshold value, the supply of the non-oxidizing gas may be continued and the exhaust of the sealed space may be continued.

Thus, when only the oxygen concentration is outside the allowable range (equal to or higher than the oxygen concentration threshold value) and the air pressure is within the allowable range (higher than the air pressure lower threshold value and lower than the air pressure upper threshold value), the supply of the non-oxidizing gas and the exhaust of the sealed space are continued. This can reduce the oxygen concentration in the sealed space effectively reduced with the air pressure kept stable continuously.

Further, as described above, in the case where the air pressure in addition to the oxygen concentration in the sealed space is measured, and the supply and exhaust are controlled on the basis of the measured values of the oxygen concentration and the air pressure, when, for example, the measured oxygen concentration is lower than the oxygen concentration threshold value, the supply of the non-oxidizing gas may be stopped and the exhaust of the sealed space may be stopped.

When the oxygen concentration thus measured reaches a value lower than the oxygen concentration threshold value, the supply of the non-oxidizing gas and the exhaust of the sealed space are stopped. This can prevent a fluctuation of the air pressure because of the non-oxidizing gas being supplied or exhausted more than necessary. This can prevent a waste of energy consumption and allows a predetermined heating treatment and cooling treatment for the workpiece to be performed while both the oxygen concentration and the air pressure are stable.

Further, in the workpiece heat treatment method according to the present invention, the air supply valve may be opened to supply the non-oxidizing gas to the sealed space, and the exhaust pump may be driven to exhaust the sealed space. In this case, a valve capable of adjusting the supply amount may be used as the air supply valve, and a pump capable of adjusting the exhaust amount may be used as the exhaust pump.

As described above, in a case where the air pressure of the sealed space is controlled, for example, when the non-oxidizing gas having a pressure higher than the atmospheric pressure is supplied, the non-oxidizing gas can be supplied to the sealed space only by opening the air supply valve without using a special pressure feeding means. This can produce a non-oxidizing gas supply device at low cost. Further, use of a valve capable of adjusting a supply amount as the air supply valve and use of a pump capable of adjusting an exhaust amount as the exhaust pump can gradually reduce the supply amount of the non-oxidizing gas or gradually reduce the exhaust amount of the sealed space. As a result, the fluctuation of the oxygen concentration or the air pressure of the sealed space can be alleviated as compared with a case where the air supply valve is changed from an open state to a closed state or the exhaust pump is stopped driving. Thus, this can stabilize the oxygen concentration and the air pressure in the sealed space more quickly.

In the workpiece heat treatment method of the present invention, the workpiece may be inductively heated to a target temperature in the heating step, and the workpiece that has been heated may be cooled and quenched in the cooling step.

In this way, by heating the workpiece to the target temperature by induction heating, only the workpiece can be directly heated, achieving high energy efficiency, and an entire heat treatment facility including the sealed space can be made compact. A compact sealed space needs a smaller air supply amount and a smaller exhaust amount for controlling the oxygen concentration, which is also preferable in terms of energy efficiency and running cost.

Further, the above-described workpiece heat treatment method allows the oxygen concentration of the sealed space to be stabilized during the heat treatment without increasing the cost or reducing the productivity and enables the heat treatment for the workpiece to be performed efficiently. The method is suitable as a method of performing the heat treatment on mass production components such as bearing rings of rolling bearings.

Further, the above problem can be also solved by the workpiece heat treatment device of the present invention. That is, this heat treatment device includes a heating part that heats a workpiece, and a cooling part that cools the workpiece that has been heated by the heating part by immersing the workpiece in a cooling liquid, and performing a predetermined heat treatment on the workpiece, in which the heating part has a first space in which the workpiece is heated, and the cooling part has a second space that is connected to the first space and is in contact with a liquid surface of the cooling liquid, the first space is provided with an inlet side opening for the workpiece, and the second space is provided with an outlet side opening for the workpiece, and the first space and the second space are both sealed by closing the inlet side opening and closing the outlet side opening with the liquid surface of the cooling liquid, and this sealed space is made into a non-oxidizing atmosphere, the workpiece heat treatment device further includes an oxygen concentration measuring device that measures an oxygen concentration in the sealed space, an air supply device that supplies a non-oxidizing gas to the sealed space, an exhaust device that exhausts the sealed space, and a control unit that controls driving of the air supply device and the driving of the exhaust device based on a value of the oxygen concentration measured by the oxygen concentration measuring device.

In the heat treatment device having the above configuration, similarly to the heat treatment method of the present invention described above, the supply of the non-oxidizing gas and the exhaust of the sealed space can be appropriately selected and executed in accordance with the oxygen concentration in the sealed space. Therefore, for example, by exhausting the sealed space while minimizing a use amount of the non-oxidizing gas, the oxygen concentration in the sealed space can be kept constant. Further, the supply of the non-oxidizing gas and the exhaust of the sealed space can be performed together, and thus the oxygen concentration in the sealed space quickly returns to fall within the allowable range. As described above, according to the present invention, the oxygen concentration in the sealed space can be stabilized during the heat treatment of the workpiece without increasing the cost or lowering the productivity.

### ADVANTAGEOUS EFFECTS OF INVENTION

As described above, according to the workpiece heat treatment method and the workpiece heat treatment device of the present invention, the oxygen concentration in the sealed space for performing the heating treatment and the cooling treatment of the workpiece is stabilized without incurring the cost increase or the decrease in the productivity, and the heat treatment of the workpiece can be efficiently performed.

### BRIEF DESCRIPTION OF DRAWINGS

FIG. 1 is a perspective view of a heat treatment device according to one embodiment of the present invention.
FIG. 2 is a front view of the heat treatment device shown in FIG. 1.
FIG. 3 is a cross-sectional view of a heating part.
FIG. 4 is a cross-sectional view of a cooling part.
FIG. 5 is a block diagram illustrating a configuration of a supply and exhaust control system of the heat treatment device.
FIG. 6A is a flowchart illustrating an overall flow of a heat treatment method according to one embodiment of the present invention.
FIG. 6B is a flowchart showing a flow of a preparation step shown in FIG. 6A.
FIG. 7 is a flowchart illustrating an example of supply and exhaust control in the preparation step.
FIG. 8 is a flowchart illustrating an example of the supply and exhaust control in a heating step and a cooling step.
FIG. 9 is a cross-sectional view of a main part of the cooling part, illustrating a state where the cooling step is executed.
FIG. 10 is a cross-sectional view of the main part of the cooling part, illustrating a state where a cooling step according to another embodiment of the present invention is executed.
FIG. 11A is a cross-sectional view of the main part of the cooling part, illustrating a state where the cooling step is executed when a constraining die according to another embodiment of the present invention is used.
FIG. 11B is a cross-sectional view of the main part of the cooling part, illustrating a state where the cooling step is executed when the constraining die according to another embodiment of the present invention is used.
FIG. 12 is a cross-sectional view of a main part of a cooling part according to another embodiment of the present invention.
FIG. 13 is a cross-sectional view of a main part of a heating part according to another embodiment of the present invention.

### DESCRIPTION OF EMBODIMENTS

Hereinafter, one embodiment of the present invention will be described with reference to the drawings.

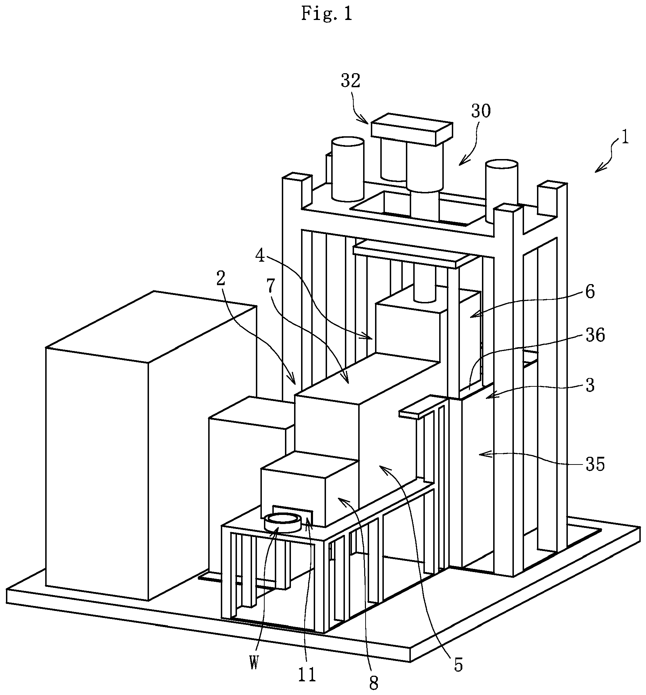

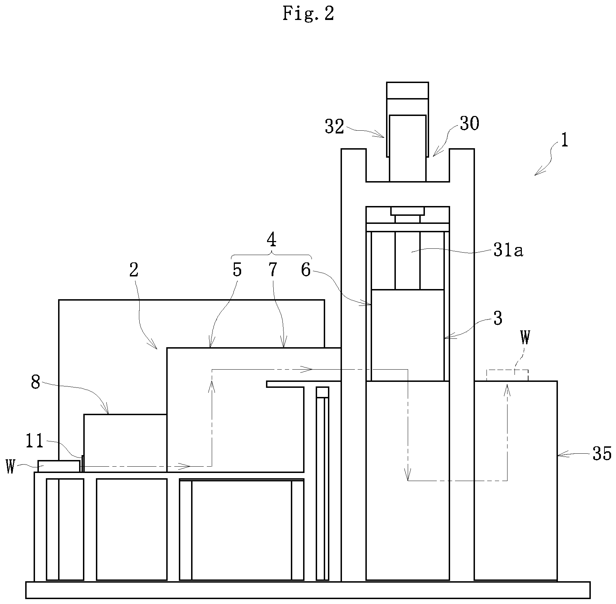

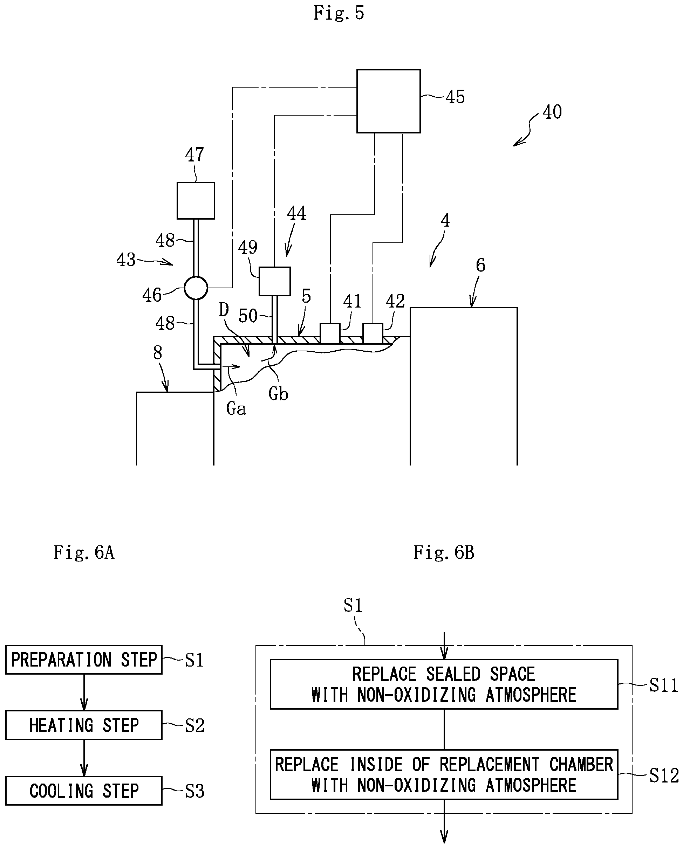

FIG. 1 is a perspective view showing an entire structure of a heat treatment device according to one embodiment of the present invention, and FIG. 2 is a front view of the heat treatment device. The heat treatment device 1 shown in FIGS. 1 and 2 is a so-called continuous heat treatment device 1 configured to perform a quenching and hardening treatment on an annular workpiece W (in this embodiment, a base material of an outer ring of a rolling bearing) including a steel material such as SUJ2 while feeding the workpiece W along a path shown by a two-dot chain line in FIG. 2. The heat treatment device 1 includes a heating part 2 executing a heating step S2 (see FIG. 6A described later) that inductively heats the workpiece W to a target temperature (quenching temperature) along a feed direction of the workpiece W, and a cooling part 3 executing a cooling step S3 (see FIG. 6A to be described later) that cools and quenches the workpiece W heated by the heating part 2. Further, the heat treatment device 1 is configured such that the heating step S2 and the cooling step S3 can be executed in a non-oxidizing atmosphere. As described later, the heat treatment device 1 further includes a supply and exhaust control system 40 for a sealed space D as an internal space of a sealed chamber 4. Hereinafter, first, a configuration of the heat treatment device 1 will be described. Then, an example of a heat treatment method using the heat treatment device 1 will be described.

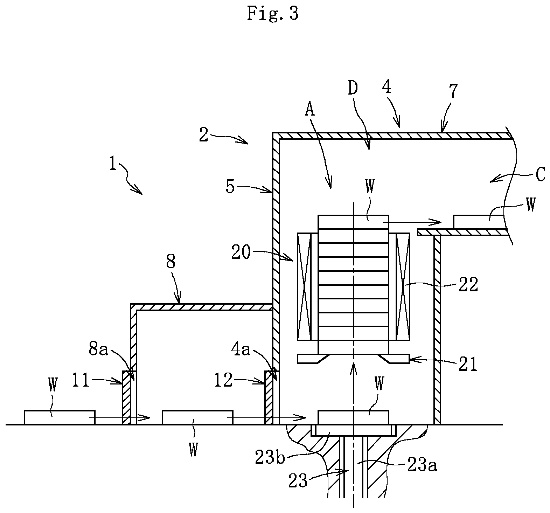

As shown in FIG. 3, the heating part 2 includes a heating device 20, a heating chamber 5, a replacement chamber 8, and a passage chamber 7.

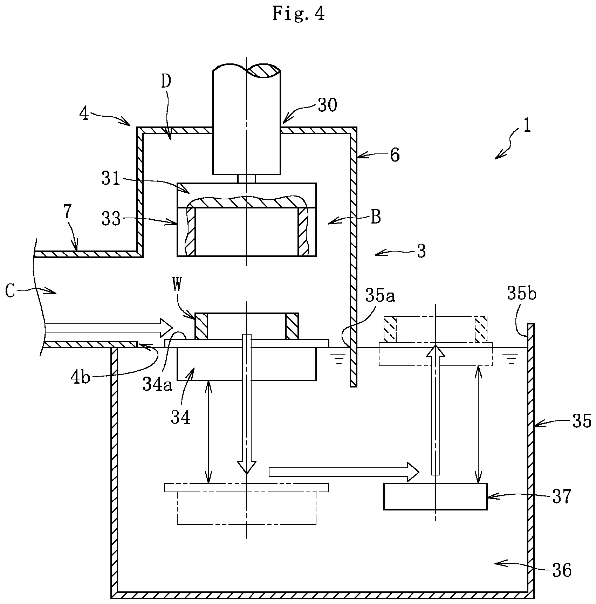

The heating device 20 is a device that inductively heats the workpiece W to the target temperature. In this embodiment, as shown in FIGS. 3 and 4, the heating device 20 includes support members 21 capable of supporting a plurality of workpieces W in a stacked state, a heating coil 22 disposed radially outside of the workpiece W supported by the support members 21, and a workpiece supply means 23 disposed below the support members 21 and supplying the workpiece W (a following workpiece W carried from upstream of a path) to the support members 21.

The support members 21 are provided at a plurality of locations (for example, three locations) spaced apart in a circumferential direction of the workpiece W to be supported. Each of the support members 21 is provided so as to be able to advance and retreat along the radial direction of the workpiece W to be supported, moves radially outward of the workpiece W to be supported while the workpiece W is supplied from below by the workpiece supply means 23, and receives the workpiece W. After receiving the workpiece W, each support member 21 moves radially inward of the workpiece W to be supported and supports the workpiece W from below.

The heating coil 22 includes, for example, a so-called multi-turn coil formed by spirally winding a tubular body made of a conductive metal such as a copper tube, and is disposed coaxially with the workpiece W supported by the support members 21. As the heating coil 22, a coil having a total length (axial direction) of several times to several tens of times an axial dimension of the workpiece W is used. By using the heating coil 22 having such a total length, the plurality of workpieces W supported in a stacked state by the support members 21 are sequentially heated inductively to a target temperature while being sent upward through an inner region of the heating coil 22 in an energized state.

The workpiece supply means 23 is configured by, for example, a power cylinder (a hydraulic cylinder, an air cylinder, or an electric cylinder) having a telescopic cylinder rod 23a disposed coaxially with the workpiece W supported by the support members 21. A flange part 23b on which the workpiece W can be placed is provided at a tip of the cylinder rod 23a.

The heating device 20 having the above configuration is disposed in an internal space of the heating chamber 5 as a first space A of the present invention. The replacement chamber 8 is disposed upstream of the heating chamber 5 (rearward in the feed direction of the workpiece W) adjacent to the heating chamber 5, and the passage chamber 7 is disposed downstream of the heating chamber 5 (forward in the feed direction of the workpiece W) adjacent to the heating chamber 5.

Here, as shown in FIG. 2, the heating chamber 5 cooperates with the passage chamber 7 and a quenching preparation chamber 6 to be described later to form the sealed chamber 4 in which an indoor atmosphere (indoor atmosphere during an operation of the heat treatment device 1) is kept as the non-oxidizing atmosphere. The sealed chamber 4 includes the heating chamber 5, the passage chamber 7, and the quenching preparation chamber 6 that are arranged in that order along the feed direction of the workpiece W. As shown in FIGS. 3 and 4, the internal space of the chamber 5 as the first space A and an internal space of the quenching preparation chamber 6 as a second space B of the present invention are connected to each other via an internal space of the passage chamber 7 (passage C) provided between the two chambers 5 and 6. Thus, in this embodiment, the sealed chamber 4 has the first space A and the second space B provided separately from each other, and the passage C, and configures a sealed space D of the present invention with the first space A, the second space B, and the passage C. The sealed chamber 4 further includes an inlet side opening 4a (see FIG. 3) from which the workpiece W is put into the internal space of the heating chamber 5, and an outlet side opening 4b (see FIG. 4) provided on a bottom wall of the quenching preparation chamber 6. The inlet side opening 4a is opened and closed by an opening and closing means (second opening and closing means 12) shown in FIG. 3. The outlet side opening 4b always keeps closed by a liquid surface of a cooling liquid 36 stored in a cooling liquid storage tank 35 as shown in FIG. 4. The supply and exhaust control system 40 for the internal space of the sealed chamber 4 (sealed space D) will be described later.

The replacement chamber 8 is provided in order to keep the indoor atmosphere of the sealed chamber 4 including the heating chamber 5 (atmosphere of the sealed space D) the non-oxidizing atmosphere when the workpiece W is put into the internal space of the heating chamber 5. Although not shown in the drawings, in order to make the atmosphere in the replacement chamber 8 replaceable to the non-oxidizing atmosphere, the replacement chamber 8 is therefore provided with an air supply device that supplies the non-oxidizing gas to the replacement chamber 8, an exhaust device that exhausts inside of the replacement chamber 8, an air supply pipe that connects the air supply device to the inside of the replacement chamber 8, and an exhaust pipe that connects the exhaust device and the inside of the replacement chamber 8.

As shown in FIG. 3, the replacement chamber 8 is provided with an opening 8a from which the workpiece W is put into an internal space of the replacement chamber 8. The opening 8a can be opened and closed by the opening and closing means (first opening and closing means 11). Any opening and closing device can be employed as the first opening and closing means 11, and for example, a vertically movable shutter can be employed.

An opening and closing means (second opening and closing means 12) is provided between the replacement chamber 8 and the heating chamber 5. The inlet side opening 4a of the sealed chamber 4 (sealed space D) can be opened and closed by the second opening and closing means 12. The second opening and closing means 12 closes the inlet side opening 4a of the sealed chamber 4 (heating chamber 5) when the opening 8a is switched from a closed state to an open state by the first opening and closing means 11. Note that any opening and closing device can be employed as the second opening and closing means 12, and for example, a vertically movable shutter can be employed.

Although not shown in the drawings, the heating part 2 has a transfer means that transfers the workpiece W put into the internal space of the replacement chamber 8 to the internal space of the heating chamber 5. As the transfer means, for example, a transfer conveyor disposed so as to straddle bottoms of the replacement chamber 8 and the heating chamber 5, or a power cylinder (a hydraulic cylinder, an air cylinder, or an electric cylinder) can be employed.

The internal space of the passage chamber 7 is heated to the target temperature by the heating device 20, and utilized as the passage C for transferring the workpiece W that has completed to be heated and discharged to the outside of the heating device 20 (above the heating coil 22) to the internal space of the quenching preparation chamber 6 as the second space B. The passage chamber 7 is provided with a transfer means such as a transfer conveyor (not shown), and the transfer means enables the workpiece W discharged to the outside of the heating device 20 to be transferred from the first space A to the second space B.

The cooling part 3 is an area where a cooling step of cooling and quenching the workpiece W heated to the target temperature by the heating part 2 is executed, as described above. The cooling part 3 according to this embodiment is configured such that the workpiece W can be cooled (quenched) while an outer peripheral surface of the workpiece W is constrained by the constraining die 33. As shown in FIGS. 1, 2, and 4, the cooling part 3 includes the quenching preparation chamber 6 disposed adjacent to a downstream of the heating chamber 5 through the passage chamber 7, a press device 30, the constraining die 33, a lifting table 34, and the cooling liquid storage tank 35.

The press device 30 includes a pressurizing member 31 that pressurizes downward the workpiece W transferred to the internal space of the quenching preparation chamber 6 (second space B) through the internal space of the passage chamber 7 (passage C) and immerses the workpiece W in the cooling liquid 36 stored in the cooling liquid storage tank 35, and a lifting unit 32 that liftably holds the pressurizing member 31. In this embodiment, the constraining die 33 is attached and fixed to a lower end of the pressurizing member 31, and the constraining die 33 can ascend and descend integrally with the pressurizing member 31. As shown in FIGS. 1 and 2, the lifting unit 32 is disposed outside of the quenching preparation chamber 6. As shown in FIG. 4, the pressurizing member 31, the constraining die 33 attached and fixed to the pressurizing member 31, and at a lower end, only a part of a shaft member holding the pressurizing member 31 are disposed in the second space B. The shaft member holding the pressurizing member 31 is inserted into a through hole penetrating a ceiling wall of the quenching preparation chamber 6, and this through hole (a gap between an inner wall surface of the through hole and an outer surface of the shaft member) is sealed with a sealing material (not shown).

As shown in FIG. 4, the cooling liquid storage tank 35 is provided below the quenching preparation chamber 6, and stores the cooling liquid 36 that cools and quenches the workpiece W. As the cooling liquid 36, a known quenching oil, a watersoluble quenching liquid, or the like can be used. In this embodiment, an upper part of the cooling liquid storage tank 35 is open, and this opening is divided into a first opening 35a and a second opening 35b by a wall of the sealed chamber 4 (quenching preparation chamber 6). The outlet side opening 4b of the sealed chamber 4 (sealed space D) provided in the quenching preparation chamber 6 is closed by the liquid surface of the cooling liquid 36 that is present inside of the first opening 35a, the cooling liquid 36 being stored in the cooling liquid storage tank 35.

As shown in FIG. 4, the lifting table 34 is disposed immediately below the pressurizing member 31, and ascends and descends in the cooling liquid 36. An upper end surface 34a of the lifting table 34 is a loading surface on which the workpiece W is placed. When the lifting table 34 is located at an ascending limit, the upper end surface 34a of the lifting table 34 is located above the liquid surface of the cooling liquid 36 stored in the cooling liquid storage tank 35, and receives the workpiece W transferred through the internal space of the passage chamber 7.

A delivery means (not shown) that delivers the quenched workpiece W released from the constraining die 33 from the lifting table 34, and a discharge means 37 that receives the delivered workpiece W and discharges the workpiece W to the outside of the cooling liquid storage tank 35 (heat treatment device 1) are provided inside the cooling liquid storage tank 35 (in the cooling liquid 36). As the discharge means 37, for example, a lifting table provided separately from the lifting table 34 can be employed. This lifting table for discharging the workpiece is provided to be able to ascend and descend at a position directly below the second opening 35b of the cooling liquid storage tank 35, and discharges the quenched workpiece W from the second opening 35b to the outside of the cooling liquid storage tank 35, that is, to the outside of the heat treatment device 1.

Next, the supply and exhaust control system 40 for the internal space (sealed space D) of the sealed chamber 4 will be described.

As shown in FIG. 5, the supply and exhaust control system 40 includes an oxygen concentration measuring device 41 that measures an oxygen concentration in the sealed space D as the internal space of the sealed chamber 4, an air pressure measuring device 42 that measures an air pressure in the sealed space D, an air supply device 43 that supplies a non-oxidizing gas Ga to the sealed space D, an exhaust device 44 that exhausts the sealed space D, and a control unit 45 that controls driving of the air supply device 43 and the exhaust device 44.

The oxygen concentration measuring device 41 is, for example, an oxygen concentration meter, and is attached to the sealed chamber 4 so as to measure the oxygen concentration in the sealed space D. The air pressure measuring device 42 is, for example, a pressure sensor, and is attached to the sealed chamber 4 so as to measure the oxygen concentration in the sealed space D.

In this embodiment, the air supply device 43 has an air supply valve 46 and a reserve tank 47 storing the non-oxidizing gas Ga. The sealed space D and the air supply valve 46 are connected by an air supply pipe 48, and the air supply valve 46 and the reserve tank 47 are connected by the air supply pipe 48. In this embodiment, the exhaust device 44 has an exhaust pump 49, and the sealed space D and the exhaust pump 49 are connected by an exhaust pipe 50. With the configuration described above, the non-oxidizing gas Ga discharged from the reserve tank 47 reaches the air supply valve 46 through the air supply pipe 48, and passes through the air supply valve 46 while the air supply valve 46 is open, and is supplied to the sealed space D through the air supply pipe 48 downstream of the air supply valve 46. In this embodiment, the non-oxidizing gas Ga having an air pressure higher than the atmospheric pressure (for example, atmospheric pressure +0.01 MPa or higher) is stored in the reserve tank 47. The non-oxidizing gas Ga automatically flows into the sealed space D having a relatively low pressure when the air supply valve 46 is opened. Further, when the exhaust pump 49 is driven, the gas Gb filling the sealed space D is discharged to the outside of the heat treatment device 1 through the exhaust pipe 50 (and further, through the inside of the exhaust pump 49). As the non-oxidizing gas, any kind of gas can be used. For example, an inert gas such as a nitrogen gas, a helium gas, an argon gas, or a reducing gas such as a hydrogen gas, a carbon monoxide gas, a nitrogen dioxide gas, a hydrogen sulfide gas, or sulfur dioxide gas can be used.

The oxygen concentration measuring device 41, the air pressure measuring device 42, the air supply device 43 (air supply valve 46), and the exhaust device 44 (exhaust pump 49) are all electrically connected to the control unit 45, as shown by a dashed line in FIG. 5. Consequently, a measured value of the oxygen concentration measured by the oxygen concentration measuring device 41 is sent to the control unit 45, and a measured value of the air pressure measured by the air pressure measuring device 42 is sent to the control unit 45. Further, when a command from the control unit 45 is sent to the air supply valve 46 and the exhaust pump 49, the driving of the air supply valve 46 and the exhaust pump 49 can be controlled in response to the command.

The control unit 45 stores a predetermined control program in advance. In this embodiment, two control programs are mainly stored. Among the two, a first control program is a program executed in a preparation step S1 (see FIG. 6A) before the heating step S2, and the second control program is a program executed in the heating step S2 and the cooling step S3 after the preparation step S1.

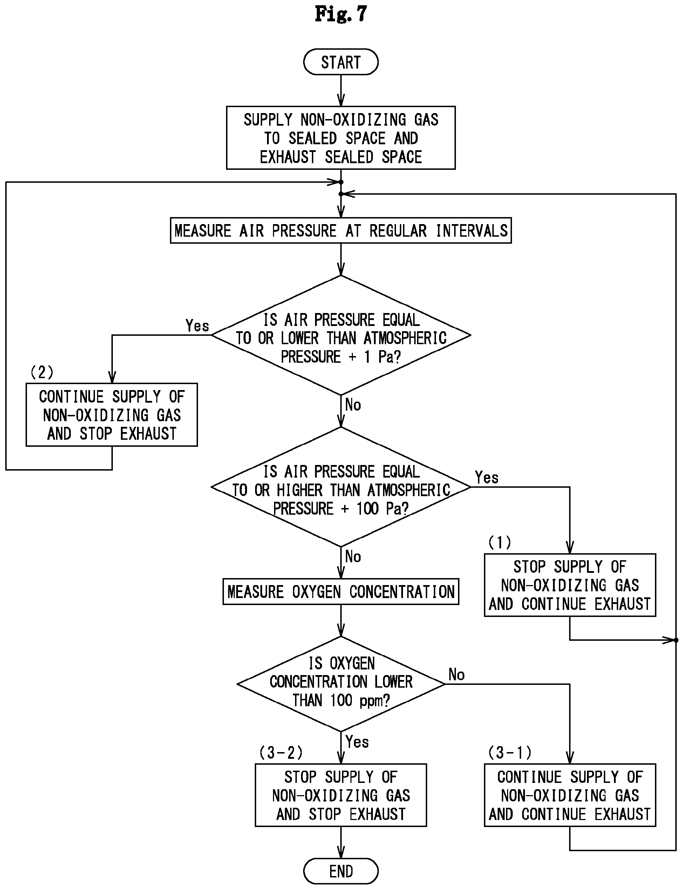

Specifically describing each control program, the first control program is set so as to supply the non-oxidizing gas Ga to the sealed space D and exhaust the sealed space D simultaneously, and control the supply and exhaust in accordance with the air pressure in the sealed space D in the preparation step S1 (see FIG. 6A) to be described later. In this embodiment, as shown in FIG. 7, the air pressure in the sealed space D is measured at regular intervals, and the supply and exhaust are controlled in three patterns in accordance with measured values of the air pressure. In other words, (1) when the measured air pressure is equal to or higher than an air pressure upper threshold value (atmospheric pressure +100 Pa in this embodiment), the air supply device 43 and the exhaust device 44 are controlled so as to stop supplying the non-oxidizing gas Ga to the sealed space D and continue to exhaust the sealed space D. Alternatively, (2) when the measured air pressure is equal to or lower than an air pressure lower threshold value (atmospheric pressure +1 Pa in this embodiment), the air supply device 43 and the exhaust device 44 are controlled so as to continue to supply the non-oxidizing gas Ga to the sealed space D and stop exhausting the sealed space D. Alternatively, when the measured air pressure is higher than the air pressure lower threshold value (atmospheric pressure +1 Pa) and lower than the air pressure upper threshold value (atmospheric pressure +100 Pa), the oxygen concentration in the sealed space is also measured. (3-1) When the measured oxygen concentration is equal to or higher than a preset oxygen concentration threshold value (for example, 100 ppm), the air supply device 43 and the exhaust device 44 are controlled so as to continue to supply the non-oxidizing gas Ga to the sealed space D, and continue to exhaust the sealed space D. Alternatively, (3-2) when the measured oxygen concentration is lower than the above threshold value (100 ppm), the air supply device 43 and the exhaust device 44 are controlled so as to stop supplying the non-oxidizing gas Ga to the sealed space D, and stop exhausting the sealed space D. In this embodiment, the air pressure upper threshold value and the air pressure lower threshold value are set to the atmospheric pressure +100 Pa and the atmospheric pressure +1 Pa, respectively. However, the present invention is not limited thereto, but may be appropriately changed in accordance with types of the workpiece W or the heat treatment or the like. The same applies to an air pressure upper threshold value and an air pressure lower threshold value in the second control program to be described later. Further, the threshold value of the oxygen concentration is set to 100 ppm in this embodiment. However, when the oxygen concentration in the sealed space D needs to be more strictly controlled in accordance with the type of the workpiece W or the heat treatment, the threshold value of the oxygen concentration may be set to 50 ppm, preferably to 20 ppm, and more preferably to 10 ppm or lower. The same applies to a threshold value of the oxygen concentration in the second control program to be described later.

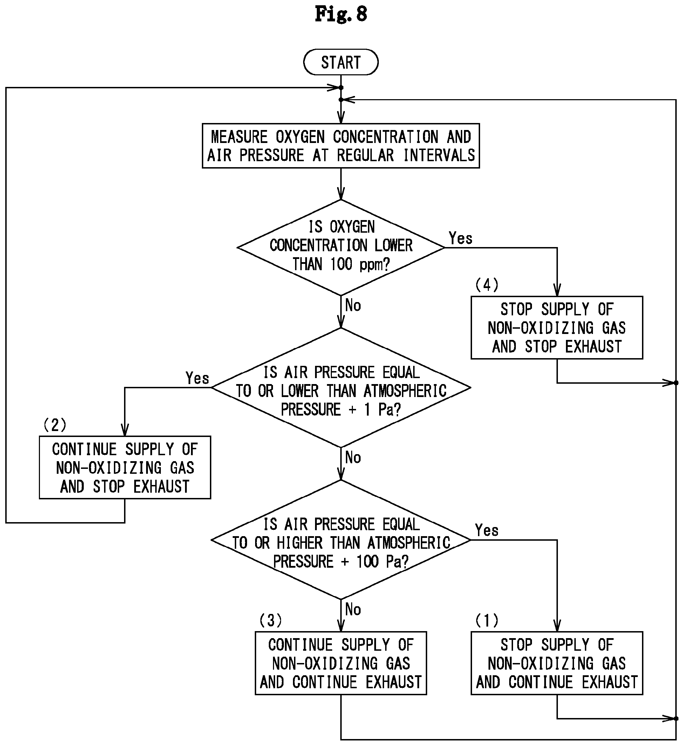

In the heating step S2 and the cooling step S3 (see FIG. 6A), the second control program is set so as to measure the oxygen concentration and the air pressure in the sealed space D at regular intervals, control the supply of the non-oxidizing gas Ga into the sealed space D and control the exhaust of the sealed space D on the basis of the measured values of the oxygen concentration and the air pressure. In this embodiment, as shown in FIG. 8, when the measured oxygen concentration is equal to or higher than the preset oxygen concentration threshold value (100 ppm in this embodiment), the control is performed in the following three patterns in accordance with the value of the air pressure measured at the same time. That is, (1) when the measured air pressure is equal to or higher than the preset air pressure upper threshold value (atmospheric pressure +100 Pa in this embodiment), the air supply device 43 and the exhaust device 44 are controlled so as to stop supplying the non-oxidizing gas Ga to the sealed space D and continue to exhaust the sealed space D. Alternatively, (2) when the measured air pressure is equal to or lower than the preset air pressure lower threshold value (atmospheric pressure +1 Pa in this embodiment), the air supply device 43 and the exhaust device 44 are controlled so as to continue to supply the non-oxidizing gas Ga to the sealed space D and stop exhausting the sealed space D. (3) When the measured air pressure is higher than the air pressure lower threshold value (atmospheric pressure +1 Pa) and lower than the air pressure upper threshold value (atmospheric pressure +100 Pa), the air supply device 43 and the exhaust device 44 are controlled so as to continue to supply the non-oxidizing gas Ga to the sealed space D and continue to exhaust the sealed space D.

When the measured oxygen concentration is lower than the oxygen concentration threshold value (100 ppm), (4) the air supply device 43 and the exhaust device 44 are controlled so as to stop supplying the non-oxidizing gas Ga to the sealed space D and stop exhausting the sealed space D.

Next, an example of the heat treatment method for the workpiece W using the heat treatment device 1 having the above configuration will be described.

As shown in FIG. 6A, the heat treatment method for the workpiece W according to this embodiment includes the preparation step S1, the heating step S2, and the cooling step S3. Further, as shown in FIG. 6B, the preparation step S1 includes a first replacement step S11 that replaces the atmosphere in the sealed space D with the non-oxidizing atmosphere and a second replacement step S12 that replaces the atmosphere in the replacement chamber 8 with the non-oxidizing atmosphere. Hereinafter, details of each step will be sequentially described with reference to FIGS. 3 to 5.

### (S1) Preparation step

### (S11) First replacement step

In this step, first, at a start of the operation of the heat treatment device 1 (before putting the workpiece W into the heat treatment device 1), the air atmosphere is replaced with a non-oxidizing atmosphere in the sealed chamber 4 including the heating chamber 5, the quenching preparation chamber 6, and the passage chamber 7 (sealed space D including the first space A, the second space B, and the passage C) (first replacement step S11). This atmosphere replacement treatment is performed by operating the air supply device 43 (the air supply valve 46 and the reserve tank 47) connected to the sealed space D to supply the non-oxidizing gas Ga to the sealed space D while closing the inlet side opening 4a and the outlet side opening 4b of the sealed chamber 4 (sealed space D), and operating the exhaust device 44 (exhaust pump 49) to exhaust the gas (normally at the start of the operation, atmosphere) Gb present in the sealed space D. The supply and exhaust by the air supply device 43 and the exhaust device 44 are performed on the basis of the first control program of the control unit 45. Hereinafter, an example of the control flow will be described mainly with reference to FIG. 7.

### [Example of supply and exhaust control in preparation step]

First, in response to a command from the control unit 45, the inlet side opening 4a and the outlet side opening 4b of the sealed chamber 4 (sealed space D) are closed, and the air supply device 43 and the exhaust device 44 are operated to supply the non-oxidizing gas Ga to the sealed space D and exhaust the sealed space D. In this embodiment, as shown in FIG. 5, opening the air supply valve 46 causes the non-oxidizing gas Ga stored in the reserve tank 47 to be supplied to the sealed space D through the air supply pipe 48. Further, driving the exhaust pump 49 causes the gas Gb present in the sealed space D to be discharged to the outside of the sealed space D (outside of the sealed chamber 4) through the exhaust pipe 50. This starts the treatment of reducing the oxygen concentration in the sealed space D.

Then, the air pressure in the sealed space D is automatically measured by the air pressure measuring device 42 at regular intervals (see FIG. 7). Here, (1) when the measured air pressure value is equal to or higher than the air pressure upper threshold value (atmospheric pressure +100 Pa), the control unit 45 sends a control command to the air supply device 43 and the exhaust device 44 to stop supplying the non-oxidizing gas Ga to the sealed space D and to continue to exhaust the sealed space D. In this embodiment, the command is sent to the air supply valve 46 and the exhaust pump 49 to close the air supply valve 46 and continue to drive the exhaust pump 49. This reduces the oxygen concentration in the sealed space D, and suppresses an air pressure rise or reduces the air pressure.

Alternatively, (2) when the measured air pressure is equal to or lower than the air pressure lower threshold value (atmospheric pressure +1 Pa), the control unit 45 sends a control command to the air supply device 43 and the exhaust device 44 to continue to supply the non-oxidizing gas Ga to the sealed space D and to stop exhausting the sealed space D. In this embodiment, the command is sent to the air supply valve 46 and the exhaust pump 49 to keep the air supply valve 46 open and stop driving the exhaust pump 49. This reduces the oxygen concentration in the sealed space D, and suppresses a decrease in the air pressure or increases the air pressure.

Alternatively, when the measured air pressure is higher than the air pressure lower threshold value (atmospheric pressure +1 Pa) and lower than the air pressure upper threshold value (atmospheric pressure + 100 Pa), the control unit 45 sends a command to the oxygen concentration measuring device 41 to measure the oxygen concentration in the sealed space D. (3-1) When the measured oxygen concentration is equal to or higher than the preset oxygen concentration threshold value (for example, 100 ppm), a control command is sent to the air supply device 43 and the exhaust device 44 to continue to supply the non-oxidizing gas Ga to the sealed space D and continue to exhaust the sealed space D. In this embodiment, the command is sent to the air supply valve 46 and the exhaust pump 49 to keep the air supply valve 46 open and continue to drive the exhaust pump 49. This facilitates the reduction in the oxygen concentration in the sealed space D proceeding toward a target range (lower than 100 ppm) while the air pressure in the sealed space D is stable within a predetermined range.

Then, (3-2) when it is detected that the measured oxygen concentration has decreased to lower than the threshold value (100 ppm) while the air pressure is kept within the above range, that is, when it is detected that the oxygen concentration has reached the target range, the control unit 45 sends a control command to the air supply device 43 and the exhaust device 44 to stop supplying the non-oxidizing gas Ga to the sealed space D and stop exhausting the sealed space D. In this embodiment, the air supply valve 46 is closed, and the driving of the exhaust pump 49 is stopped. Thus, the air pressure in the sealed space D is within a predetermined range (in this embodiment, higher than the atmospheric pressure +1 Pa, and lower than the atmospheric pressure +100 Pa), and the oxygen concentration is lower than 100 ppm, that is, in a state of the non-oxidizing atmosphere.

### (S12) Second replacement step

As described above, after the atmosphere in the sealed space D is replaced with the non-oxidizing atmosphere, the workpiece W is carried into the replacement chamber 8 (see FIG. 3) adjacent to the heating chamber 5 (first space A) while the inlet side opening 4a is closed, and the atmosphere in the replacement chamber 8 is replaced from the air atmosphere to the non-oxidizing atmosphere while the opening 8a of the replacement chamber 8 is closed (second replacement step S12). After that, the inlet side opening 4a is opened, and the workpiece W is carried into the sealed space D. After the workpiece W is carried in, the second opening and closing means 12 is in a closed state, and the inlet side opening 4a of the sealed space D is closed. Thus, the workpiece W can be carried into the sealed space D while the sealed space D is kept in the non-oxidizing atmosphere. In this embodiment, after replacing the atmosphere in the sealed space D with the non-oxidizing atmosphere, the workpiece W is carried into the replacement chamber 8, and the atmosphere in the replacement chamber 8 is replaced with the non-oxidizing atmosphere. However, of course, the present invention is not limited thereto. For example, after the workpiece W is carried into the replacement chamber 8 with the inlet side opening 4a closed in advance, and the first replacement step S12 and the second replacement step S12 may be executed, the inlet side opening 4a may be opened, and the workpiece W may be carried into the sealed space D. Further, the order of the first replacement step S11 and the second replacement step S12 is not particularly limited. For example, the first replacement step S11 may be executed after the second replacement step S12 is executed in a state where the workpiece W has been carried into the replacement chamber 8.

### (S2) Heating step

As described above, after the workpiece W is carried into the sealed space D in the non-oxidizing atmosphere, the workpiece W is subjected to the heating treatment. Specifically, as shown in FIG. 3, the workpiece W is placed on the flange part 23b of the workpiece supply means 23. Then, the cylinder rod 23a of the workpiece supply means 23 is extended while the support members 21 are retracted to a radial outside of the support members 21, and thus the workpiece W is lifted above the support members 21. Subsequently, the workpiece W is advanced radially inward of the support members 21, and thus the support members 21 support the workpiece W from below. After that, as the following workpiece W is sequentially supplied between the support members 21 and the workpiece W supported by the support members 21 through the procedure described above, an upward feeding force is applied to all the workpieces W supported by the support members 21. In this way, the workpiece W is inductively heated to the target temperature while being sent upward through the inner region of the heating coil 22 in the energized state, and is discharged to above the heating coil 22 (see FIG. 3). The workpiece W that has completed to be heated and discharged to a region above the heating coil 22 is delivered to the internal space of the passage chamber 7 by an appropriate means (not shown), and then is sent to the internal space of the quenching preparation chamber 6 (that is, the second space B) by a transfer means (not shown) provided in the internal space of the passage chamber 7 (see FIG. 3).

### (S3) Cooling step

In this step, as described above, the cooling treatment of cooling and quenching the workpiece W heated to the target temperature in the heating part 2 (heating step) is executed. Specifically, as shown in FIG. 4, first, the workpiece W transferred through the internal space of the passage chamber 7 is received so as to be placed on the upper end surface 34a of the lifting table 34. Next, the lifting unit 32 (see FIG. 2) of the press device 30 is driven to lower the pressurizing member 31 and the constraining die 33 attached and fixed to the lower end of the pressurizing member 31 integrally. The constraining die 33 is disposed on the outer periphery of the workpiece W placed on the upper end surface 34a of the lifting table 34 to be brought into a state immediately before starting to constrain the outer peripheral surface of the workpiece W with the constraining die 33. In this state, fitting between the outer peripheral surface of the workpiece W and the inner peripheral surface of the constraining die 33 is a clearance fit (see JIS B 0401-1), and the lower end surface of the constraining die 33 and the upper end surface 34a of the lifting table 34 are in contact with each other.

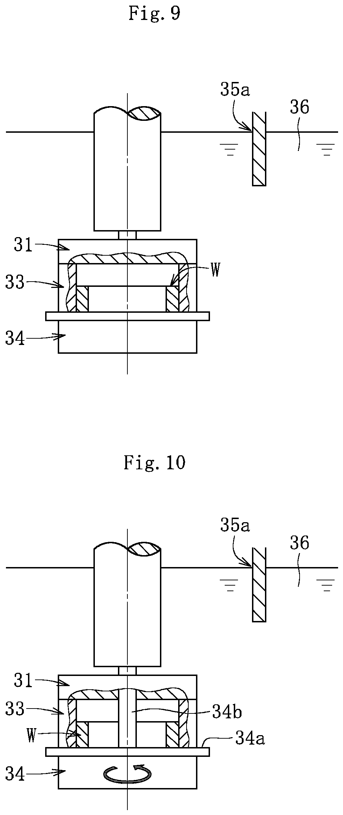

As described above, after the constraining die 33 is brought into the state immediately before starting to constrain the outer peripheral surface of the workpiece W, the pressurizing member 31, the constraining die 33, the workpiece W, and the lifting table 34 are integrally lowered and immersed in the cooling liquid 36 stored in the cooling liquid storage tank 35 as shown in FIG. 9. The workpiece W immersed in the cooling liquid 36 shows a deformation behavior in which a diameter of the workpiece W is slightly reduced and then expanded. The workpiece W is therefore cooled while the outer peripheral surface of the workpiece W is constrained by the inner peripheral surface of the constraining die 33. In this embodiment, the workpiece W is quenched by being rapidly cooled at a predetermined temperature gradient. This can effectively prevent a reduction in shape accuracy of the outer peripheral surface (particularly, roundness of the outer peripheral surface) of the workpiece W due to cooling and quenching of the workpiece W.

When the lifting table 34 reaches a lower limit, the workpiece W is released from the constraining die 33. The constraining die 33 from which the workpiece W has been released moves upward together with the pressurizing member 31 and returns to the original position. On the other hand, the workpiece W released from the constraining die 33 is delivered out of the lifting table 34 by the delivery means (not shown) provided inside of the cooling liquid storage tank 35, as shown by a white arrow in FIG. 4 and received by the discharge means 37 (lifting table for discharging the workpiece). Then, the discharge means 37 is raised, and thus the workpiece W is discharged from the second opening 35b on a side of an upper opening of the cooling liquid storage tank 35 where the liquid surface of the cooling liquid 36 contacts the atmosphere, to above the cooling liquid storage tank 35 (outside the heat treatment device 1). This completes a quenching and hardening treatment for the workpiece W. The following workpiece W is also subjected to the quenching and hardening treatment through a similar path, and is discharged to the outside of the heat treatment device 1. As described above, the quenching and hardening treatment is continuously and automatically performed on the plurality of workpieces W.

Further, during the heating step S2 and the cooling step S3 of the workpiece W executed by the heating part 2 and the cooling part 3, respectively, the sealed space D is controlled to have a predetermined range of the oxygen concentration by the second control program of the control unit 45. Hereinafter, an example of the control flow will be described mainly with reference to FIG. 8.

### [Example of supply and exhaust control in heating and cooling steps]

First, in response to a command from the control unit 45, the oxygen concentration and the air pressure in the sealed space D are measured at regular intervals by the oxygen concentration measuring device 41 and the air pressure measuring device 42. In this initial state of the control, the air supply device 43 has not started to supply the non-oxidizing gas Ga into the sealed space D, and the exhaust device 44 has not exhausted the sealed space D.

When the measured oxygen concentration is equal to or higher than the oxygen concentration threshold value (100 ppm), and (1) the measured air pressure is equal to or higher than the air pressure upper threshold value (atmospheric pressure +100 Pa), the control unit 45 sends a control command to the air supply device 43 and the exhaust device 44 to stop supplying the non-oxidizing gas Ga to the sealed space D and continue to exhaust the sealed space D. In this embodiment, the command is sent to the air supply valve 46 and the exhaust pump 49 to close the air supply valve 46 and continue to drive the exhaust pump 49. This reduces the oxygen concentration in the sealed space D, and suppresses an air pressure rise or reduces the air pressure.

Alternatively, when the measured oxygen concentration is equal to or higher than the oxygen concentration threshold value (100 ppm), and (2) the measured air pressure is equal to or lower than the air pressure lower threshold value (atmospheric pressure +1 Pa), the control unit 45 sends a control command to the air supply device 43 and the exhaust device 44 to continue to supply the non-oxidizing gas Ga to the sealed space D and stop exhausting the sealed space D. In this embodiment, the command is sent to the air supply valve 46 and the exhaust pump 49 to keep the air supply valve 46 open and stop driving the exhaust pump 49. This reduces the oxygen concentration in the sealed space D, and suppresses a decrease in the air pressure or increases the air pressure.

Alternatively, when the measured oxygen concentration is equal to or higher than the oxygen concentration threshold value (100 ppm), and (3) the measured air pressure is higher than the air pressure lower threshold value (atmospheric pressure +1 Pa) and lower than the air pressure upper threshold value (atmosphere pressure +100 Pa), the control unit 45 sends a control command to the air supply device 43 and the exhaust device 44 to continue to supply the non-oxidizing gas Ga to the sealed space D and continue to exhaust the sealed space D. In this embodiment, the command is sent to the air supply valve 46 and the exhaust pump 49 to keep the air supply valve 46 open and continue to drive the exhaust pump 49. This reduces the oxygen concentration toward the target range while the air pressure is stable within an allowable range.

(4) When the measured oxygen concentration is lower than the oxygen concentration threshold value (100 ppm), and the supply and exhaust by the supply device 43 and the exhaust device 44 have already been performed by the second control program as described above, the control unit 45 sends a control command to the air supply device 43 and the exhaust device 44 to stop supplying the non-oxidizing gas Ga to the sealed space D and stop exhausting the sealed space D. In a state where the air supply device 43 and the exhaust device 44 have not yet been operated, a control command is sent to the air supply device 43 and the exhaust device 44 to maintain a state where neither of the devices is operated (including a case where no command is sent). In this way, the heating step S2 and the cooling step S3 for the workpiece W are continuously executed while the oxygen concentration and the air pressure in the sealed space D are stable within the predetermined ranges. This control ends, for example, although not shown in the drawings, after the completion of the heating step S2 and the cooling step S3 that are repeatedly executed.

As described above, according to the heat treatment method of the present invention, during the heat treatment of the workpiece W (heating step S2 and cooling step S3), the oxygen concentration in the sealed space D is measured, and on the basis of a measured value of the oxygen concentration, the supply of the non-oxidizing gas Ga into the sealed space D is controlled, and the exhaust of the sealed space D is controlled. Thus, the supply of the non-oxidizing gas Ga and the exhaust of the sealed space D can be appropriately selected and executed in accordance with the oxygen concentration in the sealed space D. Therefore, for example, by exhausting the sealed space D while minimizing a use amount of the non-oxidizing gas Ga, the oxygen concentration in the sealed space D can be kept within a certain range (lower than 100 ppm). Further, the supply of the non-oxidizing gas Ga and the exhaust of the sealed space D can be performed together, and thus the oxygen concentration in the sealed space D quickly returns to fall within the allowable range (a concentration that becomes a non-oxidizing atmosphere, for example, lower than 100 ppm.). As described above, according to the present invention, the oxygen concentration in the sealed space D can be stabilized during the heat treatment of the workpiece W without increasing the cost or lowering the productivity.

Further, in this embodiment, the oxygen concentration and the air pressure of the sealed space D are measured at regular intervals, and on the basis of the measured values of the oxygen concentration and the air pressure, the supply of the non-oxidizing gas Ga into the sealed space D is controlled, and the exhaust of the sealed space is controlled. In this way, not only the oxygen concentration but also the air pressure in the sealed space is measured at regular intervals, and the supply of the non-oxidizing gas and the exhaust of the sealed space are controlled on the basis of the measured air pressure value. The oxygen concentration can be thus stabilized while suppressing a fluctuation of the air pressure in the sealed space. In particular, as in this embodiment, in a structure where the outlet side of the sealed space D is isolated from the atmosphere by the cooling liquid 36 (of the upper opening of the cooling liquid storage tank 35, the second opening 35b is open on the atmosphere side, and the liquid surface of the cooling liquid 36 located in the second opening 35b is in contact with the atmosphere), a liquid level of the cooling liquid 36 easily rises and falls even with a slight fluctuation of the air pressure. This makes it difficult to manage the liquid surface position and may hinder the cooling control of the workpiece W. However, as described above, controlling the supply and exhaust on the basis of the oxygen concentration and the air pressure in the sealed space D can avoid such a situation.

Further, in this embodiment, the non-oxidizing gas Ga is supplied to the sealed space D and the sealed space D is exhausted simultaneously in the preparation step S1 in which the atmosphere in the sealed space D is set to the non-oxidizing atmosphere before the heating step S2 to be in a state where the workpiece W can be carried into the sealed space D. This can increase a speed of the replacement with the non-oxidizing atmosphere, for example, as compared with a case where only the non-oxidizing gas Ga is supplied or a case where only the sealed space D is exhausted. This allows the heat treatment device 1 to start operating quickly, and the productivity to be improved. Further, the supply of the non-oxidizing gas Ga and the exhaust of the sealed space D are controlled in accordance with the air pressure in the sealed space D, and thus the air pressure in the sealed space D can be maintained within a preset range even when a supply amount or an exhaust amount is increased. It is therefore possible to quickly replace the atmosphere in the sealed space D with the non-oxidizing atmosphere while stabilizing the liquid surface level of the cooling liquid 36.

Although the heat treatment method and the heat treatment device 1 according to one embodiment of the present invention have been described above, the heat treatment device 1 can be appropriately modified without departing from the gist of the present invention.

For example, in the above embodiment, first, supply and exhaust control in the heating step S2 and the cooling step S3 has been described, in which the oxygen concentration and the air pressure of the sealed space D are measured at regular intervals, and the driving of the air supply device 43 and the driving of the exhaust device 44 are controlled in accordance with the measured values of the oxygen concentration and the air pressure (see FIG. 8). However, of course, control modes are not limited thereto. For example, although not shown in the drawings, only the oxygen concentration in the sealed space D is measured at regular intervals, and the air pressure in the sealed space D is also measured only when the measured oxygen concentration is equal to or higher than the oxygen concentration threshold value (for example, 100 ppm). The driving of the air supply device 43 and the exhaust device 44 may be controlled in accordance with the measured air pressure value.

Further, in the above embodiment, the control of the air supply device 43 and the exhaust device 44 by the control unit 45 have been described, in which two types of driving and stopping of the air supply device 43 (open and closed states of the air supply valve 46) and driving and stopping of the exhaust device 44 (driving and stopping of the exhaust pump 49) are selectively controlled. However, of course, other control modes can be employed. Specifically, although not shown in the drawings, when a configuration including the air supply valve 46 is employed as the air supply device 43, by applying, to the air supply valve 46, a valve capable of adjusting a supply amount (supply flow rate) of the non-oxidizing gas Ga, which is for example, an electric valve whose opening degree can be electrically controlled, an increase or decrease in the supply amount of the non-oxidizing gas Ga can be adjusted. Similarly, when a configuration including the exhaust pump 49 is employed as the exhaust device 44, by applying, to the exhaust pump 49, a pump capable of adjusting the exhaust amount of the sealed space D, which is for example, an electric pump incorporating a motor that can electrically control the number of rotations therein, an increase or decrease in the exhaust amount can be adjusted. In this case, although not shown in the drawings, for example, the opening degree of the air supply valve 46 and the flow rate of the exhaust pump 49 may be controlled to increase or decrease in accordance with a degree of deviation from allowable limits (upper limit and lower limit) of the oxygen concentration and the air pressure. Alternatively, the opening degree of the air supply valve 46 and the flow rate of the exhaust pump 49 may be controlled to increase or decrease in accordance with the fluctuation (increase or decrease) of the oxygen concentration and the air pressure from the measured values obtained immediately before the previous measurement. In this way, controlling the supply amount or the exhaust amount can alleviate the fluctuation of the oxygen concentration or the air pressure in the sealed space D. Thus, this can stabilize the oxygen concentration and the air pressure of the sealed space D more quickly and accurately. In particular, in the heat treatment device 1 of the present invention, although a volume of the sealed space D can be reduced, there is a possibility that so-called large pulsation may occur when the supply and exhaust control is performed as described above. On the other hand, the pulsation can be suppressed to be small by controlling the driving and stopping including a fine adjustment for increasing or decreasing the supply amount and the exhaust amount as described above. This can therefore further stabilize the oxygen concentration and the air pressure of the sealed space D.

Advantages of the supply amount of the air supply device 43 and the exhaust amount of the exhaust device 44 being electrically adjustable are as follows. That is, as in this embodiment, when performing the supply and exhaust control during the preparation step S1 (first replacement step S11) and performing the supply and exhaust control during the heating step S2 and the cooling step S3, a required supply amount or exhaust amount differs between the former case and the latter case. That is, in the former case (preparation step S1), the oxygen concentration in the sealed space D needs to be reduced in a short time from a state of being close to the oxygen concentration in the atmosphere to a state of being lower than a predetermined oxygen concentration threshold value (100 ppm). The required supply amount or exhaust amount is therefore significantly large. On the other hand, in the latter case (heating step S2 and cooling step S3), heating and cooling treatments are repeatedly performed while the oxygen concentration in the sealed space D is once reduced to lower than the predetermined oxygen concentration threshold value (100 ppm). As a result, even when the oxygen concentration in the sealed space D fluctuates every time the workpiece W is carried in and out, the oxygen concentration in the sealed space D is still considerably lower than the oxygen concentration in the atmosphere, and the required supply amount or exhaust amount can be relatively small. For the above reasons, for example, when the air supply valve 46 capable of adjusting the opening degree is applied to the air supply device 43, the opening degree is preferably basically set to a maximum (full opening) in the preparation step S1, and the opening degree is preferably set to an intermediate level (the opening is smaller than in the preparation step S1) in the heating step S2 and the cooling step S3. Further, when the exhaust pump 49 capable of adjusting the flow rate is applied to the exhaust device 44, the exhaust pump 49 is preferably driven in a relatively high flow rate region in the preparation step S1, and the exhaust pump 49 is preferably driven in a middle flow region or a low flow rate region in the heating step S2 and the cooling step S3. Thus, by using the common supply and exhaust control system 40 (air supply device 43 and exhaust device 44), the supply and exhaust control in the preparation step S1 and the supply and exhaust control during the heat treatment (heating step S2 and cooling step S3) can be performed with high accuracy.

Of course, a configuration of the air supply device 43 and the exhaust device 44 is arbitrary, and devices other than the air supply valve 46 and the exhaust pump 49 can be applied. For example, the supply and exhaust control of the present invention monitors (controls) the air pressure in the sealed space D such that the air pressure does not excessively rise during the heat treatment. Thus, a device such as a relief valve having a simple structure that allows air to escape only when the pressure is high is applicable to the exhaust device 44.

Further, in a structure of the cooling part 3, the cooling part 3 can be provided with a rotating mechanism that integrally rotates the workpiece W and the constraining die 33 constraining the workpiece W around the axis of the workpiece W in the cooling liquid 36. FIG. 10 illustrates an example of the structure, in which the rotating mechanism is provided on the lifting table 34. In this case, the pressurizing member 31 is provided idly rotatably around the axis of the workpiece W, and the lifting table 34 is provided with a pin 34b fitted to the pressurizing member 31. The lifting table 34 is rotatably driven while the lifting table 34 and the pressurizing member 31 fitted with the pin 34b provided on the lifting table 34 are immersed in the cooling liquid 36. Thus, the workpiece W and the constraining die 33 can be integrally rotated around the axis of the workpiece W provided between the pressurizing member 31 and the lifting table 34. This can uniformly cool the workpiece W immersed in the cooling liquid 36, and further improve the shape accuracy of the workpiece W after quenching is completed.

Although not shown in detail in the drawings, in addition to or in place of the rotating mechanism described above, the cooling part 3 may be provided with a stirring mechanism that stirs the cooling liquid 36 when at least the workpiece W is immersed in the cooling liquid 36. This is advantageous in uniformly cooling the workpiece W immersed in the cooling liquid 36, as in the case where the rotating mechanism is provided in the cooling part 3.

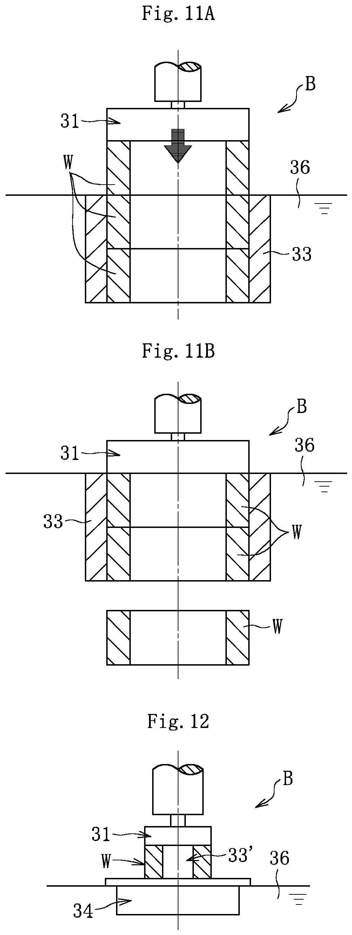

Further, the constraining die 33 is attached and fixed to the pressurizing member 31 of the press device 30 as in the embodiment described above, or alternatively, can be also fixed and disposed in the cooling liquid 36 as shown in FIGS. 11A and 11B. The constraining die 33 shown in FIGS. 11A and 11B constrains the outer peripheral surface of the workpiece W with the inner peripheral surface of the constraining die 33, and has an axial dimension obtained by adding the axial dimensions of two workpieces W. In this case, the workpiece W transferred to the internal space (second space B) of the quenching preparation chamber 6 is disposed above the constraining die 33 (the workpiece W pressed into the inner periphery of the constraining die 33). Subsequently, as the pressurizing member 31 moves downward and is pressed downward, the workpiece W is immersed into the cooling liquid 36 and the outer peripheral surface of the workpiece W is constrained by the constraining die 33 simultaneously. Then, as shown in FIG. 11B, as the following workpiece W is completely pushed into the inner periphery of the constraining die 33, the lower workpiece W of the two workpieces W disposed on the inner periphery of the constraining die 33 is released from the constraining die 33. When this constraining die 33 is employed, a "treatment of bringing into a state immediately before starting to constrain the outer peripheral surface of the workpiece W" in the present invention refers to the treatment of bringing a lower end surface of the pressurizing member 31 into contact with an upper end surface of the workpiece W transferred to the second space B. In this case, the lifting table 34 used in the embodiment described above is not necessary, but an appropriate receiving member that receives the released workpiece W may be disposed directly below the pressurizing member 31.

In the above description, (a base material of) an outer ring of a rolling bearing is given as an example of the workpiece W, and the heat treatment device 1 is used in the case where the workpiece W is cooled and quenched while the outer peripheral surface of the workpiece W is constrained by the constraining die 33. However, the heat treatment device 1 can be also preferably used in a case where the workpiece W in which the shape accuracy (particularly roundness) of the inner peripheral surface is preferably prevented from being collapsed due to quenching (for example, a base material of an inner ring of a rolling bearing) is subjected to the quenching and hardening treatment. FIG. 12 illustrates an example of the above case, in which a constraining die 33' capable of constraining the inner peripheral surface of the workpiece W is attached and fixed to the lower end surface of the pressurizing member 31.

In this case, an operation mode of the cooling part 3 configuring the heat treatment device 1 and a mode of a shape change of the workpiece W due to the immersion in the cooling liquid 36 are basically similar to the embodiment described with reference to FIGS. 4 and 9. In short, when the workpiece W is immersed in the cooling liquid 36, the diameter of the workpiece W is first reduced and then expanded. Thus, the inner peripheral surface of the workpiece W is constrained by the constraining die 33' in the initial stage of being immersed in the cooling liquid 36, but is basically not constrained by the constraining die 33' in the stage of being released. Consequently, the shape accuracy of the inner peripheral surface of the workpiece W cannot be as high as that when the outer peripheral surface of the workpiece W is constrained by the constraining die 33 described above. However, the inner peripheral surface of the workpiece W is temporarily constrained by the outer peripheral surface of the constraining die 33' during the cooling and quenching of the workpiece W, and thus the shape accuracy of the inner peripheral surface of the workpiece W is improved as compared with the case where a so-called die-constrained hardening employed in the present invention is not employed.

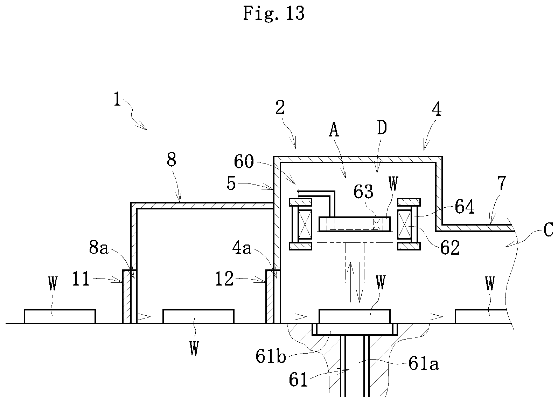

Further, the heating device 20 provided in the heating part 2 of the heat treatment device 1 described in the above embodiment is merely an example, and another heating device can be used. FIG. 13 illustrates an example of such a heating device, and is a cross-sectional view of a main part of a heating device 60 according to another embodiment of the present invention. The heating device 60 shown in FIG. 13 is a heating device configured to be able to inductively heat the workpiece W one by one, and includes a support member 61 having a telescopic cylinder rod 61a provided with a flange part 61b that can place the workpiece W at a tip of the flange part 61b, a substantially annular outer diameter side coil 62 located on an outer diameter side of the workpiece W, and a substantially annular inner diameter side coil 63 located on an inner diameter side of the workpiece W. Both of the coils 62 and 63 are disposed coaxially with the cylinder rod 61a. The outer diameter side coil 62 is held by a coil holding member including an insulating material indicated by a reference numeral 64.

When the heating device 60 shown in FIG. 13 is employed, the workpiece W put into the internal space (first space A) of the heating chamber 5 is inductively heated as follows and carried out to the internal space of the passage chamber 7 (passage C).

First, as shown in FIG. 13, the atmosphere in the sealed space D is made into the non-oxidizing atmosphere, and the atmosphere in the replacement chamber 8 into which the workpiece W is put is made into the non-oxidizing atmosphere. Then, the inlet side opening 4a is opened and the workpiece W is carried in the first space A of the sealed space D. Subsequently, after the workpiece W that has been carried in is placed on the flange part 61b of the support member 61, the inlet side opening 4a is closed, and the cylinder rod 61a of the support member 61 is extended. Thus, the workpiece W placed on the flange part 61b is raised, introduced between the outer diameter side coil 62 and the inner diameter side coil 63 in an energized state, and held at this position for a predetermined period of time. The workpiece W is thus inductively heated to the target temperature. After the heating of the workpiece W is completed, the cylinder rod 61a of the support member 61 is shortened, and the heated workpiece W is lowered together with the flange part 61b. Then, when the workpiece W reaches a predetermined position in a vertical direction, the workpiece W after the completion of the heating is delivered toward the passage C by an appropriate means (not shown). In FIG. 13, the workpiece W after the completion of the heating can be delivered to the passage C at an equal height level to the position where the workpiece W is introduced into the support member 61. In this case, the following workpiece W can be introduced onto the flange part 61b of the support member 61 simultaneously when the workpiece W is delivered. This enables the workpiece W to be inductively heated by the heating device 60 efficiently.

Also in this case, by applying the heat treatment method or the heat treatment device 1 of the present invention, the oxygen concentration and the air pressure of the sealed space D during heat treatment can be stabilized without increasing the cost and lowering the productivity, and the workpiece can be subjected to the heat treatment efficiently. When the heating device 60 having the above configuration is employed, there are advantages that the height of the sealed chamber 4 (particularly, the heating chamber 5) can be reduced and the heat treatment device 1 can be made compact as compared with the case where the heating device 20 shown in FIG. 3 and the like is employed.

Further, the case has been described where the heat treatment device 1 of the present invention is applied when the bearing ring (outer ring or inner ring) of the rolling bearing is quenched and hardened. However, the heat treatment device 1 of the present invention can be preferably applied when another annular workpiece which is, for example, a sliding bearing, an outer joint member or an inner joint member configuring a constant velocity universal joint, or (a base material of) a cage incorporated in a rolling bearing or a constant velocity universal joint is subjected to the quenching and hardening treatment.

In the above description, the case where the workpiece W is subjected to the quenching treatment by performing the predetermined heating treatment and cooling treatment. However, the present invention can be of course applied to a heat treatment other than quenching.

The present invention is not limited to the above-described embodiments at all, and may be implemented in various other forms without departing from the gist of the present invention. That is, the scope of the present invention is defined by the claims, and further includes equivalent meanings described in the claims and all modifications within the claims.

## Claims

1. A workpiece heat treatment method comprising:
a heating step of heating a workpiece; and
a cooling step of cooling the workpiece that has been heated in the heating step by immersing the workpiece in a cooling liquid, and performing a predetermined heat treatment on the workpiece,
wherein an inlet side opening for the workpiece is provided in a first space in which the heating step is executed, and an outlet side opening for the workpiece is provided in a second space that is connected to the first space and is in contact with a liquid surface of the cooling liquid,
the heating step and the cooling step are executed while the first space and the second space are both sealed by closing the inlet side opening and the outlet side opening with the liquid surface of the cooling liquid to set this sealed space to a non-oxidizing atmosphere, and
an oxygen concentration of the sealed space is measured, and based on a measured value of the oxygen concentration, a supply of a non-oxidizing gas to the sealed space is controlled and exhaust of the sealed space is controlled in the heating step and the cooling step.

2. The workpiece heat treatment method according to claim 1, wherein an oxygen concentration and an air pressure of the sealed space are measured at regular intervals, and based on measured values of the oxygen concentration and the air pressure, the supply of the non-oxidizing gas into the sealed space is controlled, and the exhaust of the sealed space is controlled.

3. The workpiece heat treatment method according to claim 2, wherein when the measured value of the oxygen concentration is equal to or higher than an oxygen concentration threshold value and the measured value of the air pressure is equal to or higher than an air pressure upper threshold value, the supply of the non-oxidizing gas is stopped and the exhaust of the sealed space is continued.

4. The workpiece heat treatment method according to claim 2, wherein when the measured value of the oxygen concentration is equal to or higher than an oxygen concentration threshold value and the measured value of the air pressure is equal to or lower than an air pressure lower threshold value, the supply of the non-oxidizing gas is continued and the exhaust of the sealed space is stopped.

5. The workpiece heat treatment method according to claim 2, wherein when the measured value of the oxygen concentration is equal to or higher than an oxygen concentration threshold value and the measured value of the air pressure is higher than an air pressure lower threshold value and lower than an air pressure upper threshold value, the supply of the non-oxidizing gas is continued and the exhaust of the sealed space is continued.

6. The workpiece heat treatment method according to claim 2, wherein when the measured value of the oxygen concentration is lower than an oxygen concentration threshold value, the supply of the non-oxidizing gas is stopped and the exhaust of the sealed space is stopped.

7. The workpiece heat treatment method according to any one of claims 2 to 6, wherein
an air supply valve is opened to supply the non-oxidizing gas to the sealed space, and an exhaust pump is driven to exhaust the sealed space, and
a valve capable of adjusting a supply amount is used as the air supply valve, and a pump capable of adjusting an exhaust amount is used as the exhaust pump.

8. The workpiece heat treatment method according to any one of claims 1 to 7, wherein the workpiece is inductively heated to a target temperature in the heating step, and the workpiece that has been heated is cooled and quenched in the cooling step.

9. The workpiece heat treatment method according to any one of claims 1 to 8, wherein the workpiece is an annular ring of a rolling bearing.

10. A workpiece heat treatment device comprising:
a heating part that heats a workpiece; and
a cooling part that cools the workpiece that has been heated by the heating part by immersing the workpiece in a cooling liquid, and performing a predetermined heat treatment on the workpiece,
wherein the heating part has a first space in which the workpiece is heated, and the cooling part has a second space that is connected to the first space and is in contact with a liquid surface of the cooling liquid,
the first space is provided with an inlet side opening for the workpiece, and the second space is provided with an outlet side opening for the workpiece, and
the first space and the second space are both sealed by closing the inlet side opening and closing the outlet side opening with the liquid surface of the cooling liquid, and this sealed space is made into a non-oxidizing atmosphere,
the workpiece heat treatment device further comprising:
an oxygen concentration measuring device that measures an oxygen concentration in the sealed space;
an air supply device that supplies a non-oxidizing gas to the sealed space;
an exhaust device that exhausts the sealed space; and
a control unit that controls driving of the air supply device and driving of the exhaust device based on a value of the oxygen concentration measured by the oxygen concentration measuring device.
